# EUROPEAN PATENT APPLICATION

(11) **EP 2 804 373 A1**
(43) Date of publication of application: **19.11.2014**
(21) Application number: 13305632.5
(22) Date of filing: 17.05.2013
(51) Int. Cl.: H04N 7/15, H04L 12/18, H04L 29/06, H04M 3/56

(54) **A method, and system for video conferencing**

(71) Applicant: ALCATEL LUCENT, 92100 Boulogne-Billancourt (FR)
(72) Inventor: Leroy, Jean Francois, 29806 Brest (FR); Abou-Chakra, Rabih, 92707 Colombes (FR)
(74) Representative: Kröhnert, Michael

(57) **Abstract**

The invention concerns a method of video conferencing, **comprising**
- determining a communication context from information about one or more participants of the video conference,
- accessing content of a predetermined setup for one or more of the participants associated to the respective participant of the conference,
- correlating between the communication context and the predetermined setup associated to the one or more participants, and
- processing video data depending on the result of the correlation.

The invention concerns a respective system as well.

## Description

### Field of the invention

The invention relates to a method and system for video conferencing.

### Background

In an implementation capable of video conferencing the resolution or compression of the video data is negotiated automatically between the participants' clients in the session initiation before the conference. Video images are typically captured by video cameras, e.g. using charged coupled device sensors. The so captured images typically display the participant and the background, e.g. the room the participant is in. Video image processing is used to replace the background with an individual background image for the individual participants.

However changes to the setup, e.g. the background image or to other parameters, have to be made by the participant during the session initiation or during the video conference globally.

### Summary

The object of the invention is thus provide a method of video conferencing wherein the setup is automatically determined depending on the context of the planned communication, referred to as communication context below. The method comprises
- determining a communication context from information about one or more participants of the video conference,
- accessing content of a predetermined setup for one or more of the participants associated to the respective participant of the conference,
- correlating between the communication context and the predetermined setup associated to the one or more participants, and
- processing video data depending on the result of the correlation.

Advantageously the predetermined setup is an Augmented Realty Profile comprising a mapping of communication context and information about one or more participant. This simplifies the handling of the profile data.

Advantageously an Augmented Reality Profile Repository is accessed. This simplifies the data access.

Advantageously the predetermined setup is loaded upon successful correlation and a predetermined default setup is loaded otherwise. This increases robustness.

Advantageously the video conference is started after the setup is loaded. This allows loading the setup invisibly for the participants and increases the viewer's impression.

Advantageously the setup is selected by looking up the Augmented Reality Profile depending on information about a caller identification. Using the caller identification allows to use information already sent by the invite messages of the video conferencing protocols. This makes the solution fit as an add on to existing video conferencing solutions and simplifies the data structures.

Advantageously a caller specific background or a caller specific video parameter is selected as setup for the video conference. This allows customizing the video data sent from one participant automatically.

A system for video conferencing comprising
- a first processor adapted to determine a communication context from information about one or more participants of the video conference,
- a second processor adapted to access content of a predetermined setup for one or more of the participants associated to the respective participant of the conference, and
- a controller adapted to correlate between the communication context and the predetermined setup associated to the one or more participants, and to process video data depending on the result of the correlation is subject of the invention too.

Further developments of the invention can be gathered from dependent claims and the following description.

### Brief description of the figures

In the following the invention will be explained further making reference to the attached drawings.
Fig. 1 schematically shows a first part of a computer network.
Fig. 2 schematically part of a system.
Fig. 3 schematically shows a flow chart, showing some typical steps in a method.

### Description of the embodiments

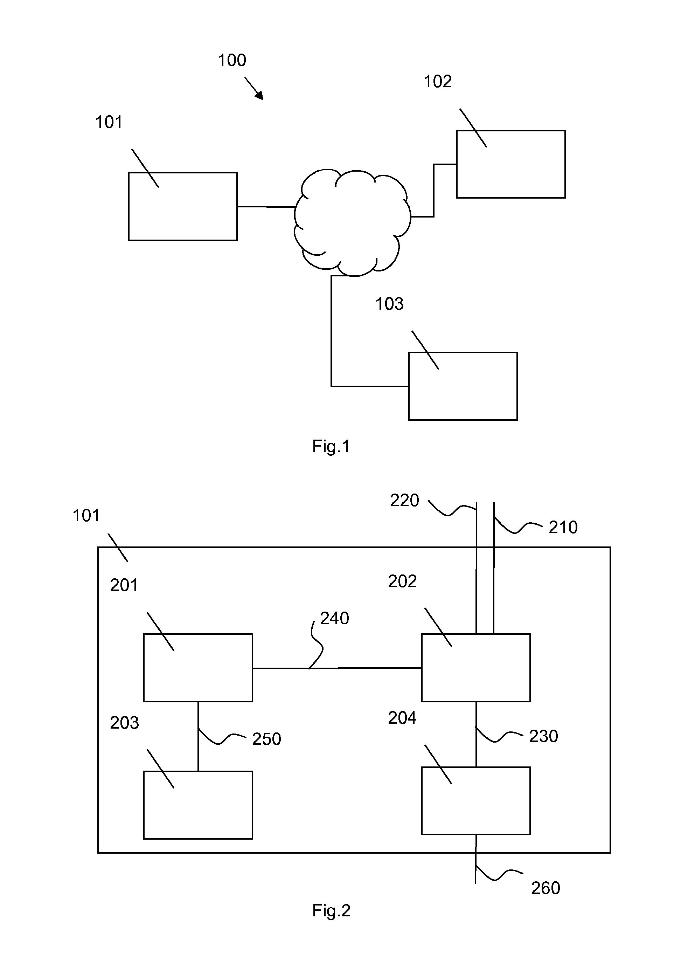

Figure 1 shows a first part of a computer network 100.

In a first embodiment depicted in figure 1 and figure 2 the computer network 100 comprises a server 101, a first client 102 and a second client 103.

The server 101 according to figure 2 is a multimedia session manager providing signaling processing, basic communication services, such as routing or controlling multi devices behavior, and context based video treatments.

The server 101 comprises a system of a first processor 204, a second processor 201 and a controller 202.

The first processor 204 is adapted to determine a communication context from information about one or more participants of the video conference. The first processor 204 is for example adapted as Communication Context process. The function of this component is to define a communication context according to the information retrieved from session handling. The information may be attributes of the participants or types of communication available to the participants in a video conference.

The server 101 according to figure 2 comprises a second processor 201 adapted to access content of a predetermined setup for one or more of the participants associated to the respective participant of the conference. The second processor 201 is for example adapted to act as Augmented Reality Profile repository front end in the system. The Augmented Reality Profile is for example implemented as list of parameters.

The server 101 according to figure 2 comprises a data base 203, adapted as an Augmented Reality Profile Repository. This Repository stores Augmented Reality Profile associated to user registered to the system. Augmented Reality Profiles can be managed by the administrator of the system or directly by the end user.

The processor 201 is for example adapted as front end for database abstraction by providing published application programmable interfaces (well known as APIs) of the Augmented Reality Profile Repository of the data base 203. It may also support a caching mechanism.

The server 101 according to figure 2 comprises a controller 202 adapted to correlate between the communication context and the predetermined setup associated to the one or more participants, and to process video data depending on the result of the correlation. For example the controller 202 is adapted to make the correlation between the communication context and the Augmented Reality Profile associated to one or more participants of the video conference, in order to define the video treatment to process by the video conference clients 102, 103.

Optionally, the second processor 201 or the controller 202 is adapted to provide the logic to manage the Augmented Reality Profile in the data base 203. This includes providing an interface for clients 102, 103 to manage the Augmented Reality Profile remotely.

In a second embodiment, not depicted, the system is distributed, i.e. the components of the server 101 are distributed on devices throughout the computer network 100. Preferably, the components are either on a server 101 or the clients 102, 103. However, the components may also be on network nodes not depicted.

The data link between the devices, e.g. the server 101 and the clients 102, 103 comprises for example local area network (LAN), wireless local area network (WLAN, 802.11n) or wide area network (WAN). The connection is for example according to the well known internet protocol (IP), user datagram protocol (UDP), transmission control protocol (TCP) or stream control transmission protocol (SCTP). Signaling is for example according to the well known Simple Object Access Protocol (SOAP), Representational State Transfer (REST), session initiation protocol (SIP) or Internet Protocol Multimedia Subsystem (IMS). Addressing may be done using the well known uniform resource locators (URL), uniform resource identifiers (URI).

The connection can but must not be directly between the devices. The typical use is on wide area networks with multiple intermediate devices.

The controller 202 is adapted to load a predetermined setup is upon successful correlation and to load a predetermined default setup otherwise. Loading in this context means to trigger the clients 102, 103 and the components of the server 101 or the video processing node to adapt the video images according to the predetermined setup. The default setup may be to not change the captured video at all, or to remove the background and replace it with an image of a white background or a predetermined company logo instead. This means that as setup for example a caller specific background or a caller specific video parameter is selected for the video conference.

The controller 202 is adapted to start the video conference after the setup is loaded. This means that the controller 202 is adapted to send a start signal, e.g. a acknowledge message to the clients 102, 103.

The controller 202 is adapted to select a setup by looking up the Augmented Reality Profile depending on information about a caller's identification.

The clients 102, 103 are for example personal computers or laptops adapted as software clients or specific processors as hardware. The clients 102, 103 are in any case adapted to provide audio and video capabilities. The clients 102, 103 may be adapted to process real-time video treatments such as background extraction, image insertion, color and contrast management.

Optionally the clients 102, 103 may comprise a user interface for Augmented Reality Profile management. In this case the clients 102, 103 are adapted to prompt the participant for input regarding the setup and transfer the input to manage the Augmented Reality Profile remotely. The setup may be the choice of predefined background image or logo of the company.

Depending on the video sub-device controlled by the software client (external USB video device or integrated camera) some video treatments can be handled by embedded functions of the client 102, 103.

The client 102, 103 can be used connected to a local area network, such as a corporate network, or with a computer located outside a corporate network, e.g. at home. For the remote worker configuration, security gateway may be required in order to secure the data exchanged between the client and the server 101.

A first data link 210 in the example connects to the controller 202. The first data link 210 is for example a real time transport protocol (well known as RTP) link used to connect the contextual video treatment controller 202 to the clients 102, 103.

A second data link 220 in the example connecting to the controller 202 may optionally be used to manage the Augmented Reality Profiles remotely. The second data link 220 for example connects the controller 202 to the clients 102, 103. The second data link 220 is for example according to the Simple Object Access Protocol (well known as SOAP) over a Hypertext Transfer Protocol (well known as HTTP) link or Hypertext Transfer Protocol Secure (well known as HTTPS) link.

A third data link 230 in the example connects the first processor 204 and the controller 202. This data link is for example according to the Realtime Transport Protocol (well known as RTF) to exchange the communication context used to define the setup or parameters for video treatment associated to the communication in progress.

A fourth data link 240 in the example connects the second processor 201 and the controller 202. This link is for example used to access content of the Augmented Reality Profile. The fourth link is for example a Simple Object Access Protocol (well known as SOAP) over HTTP Hypertext Transfer Protocol)

A fifth data link 250 in the example connects the second processor 201 and the data base 203. The fifth data link 250 is for example adapted for using Structured Query Language (well known as SQL) to access the Augmented Reality Profile repository.

A sixth data link 260 in the example connects to the first processor 204. The sixth data link 260 is for example used to exchange information such as the type of the call or identity of the participants of the video conference associated to the session in order to define communication context. The sixth data link 260 is for example according to the session initiation protocol (well known as SIP).

The data links 210, 220, 230, 240, 250, 260 may be directly or with one or more intermediate network nodes of the computer network 100.

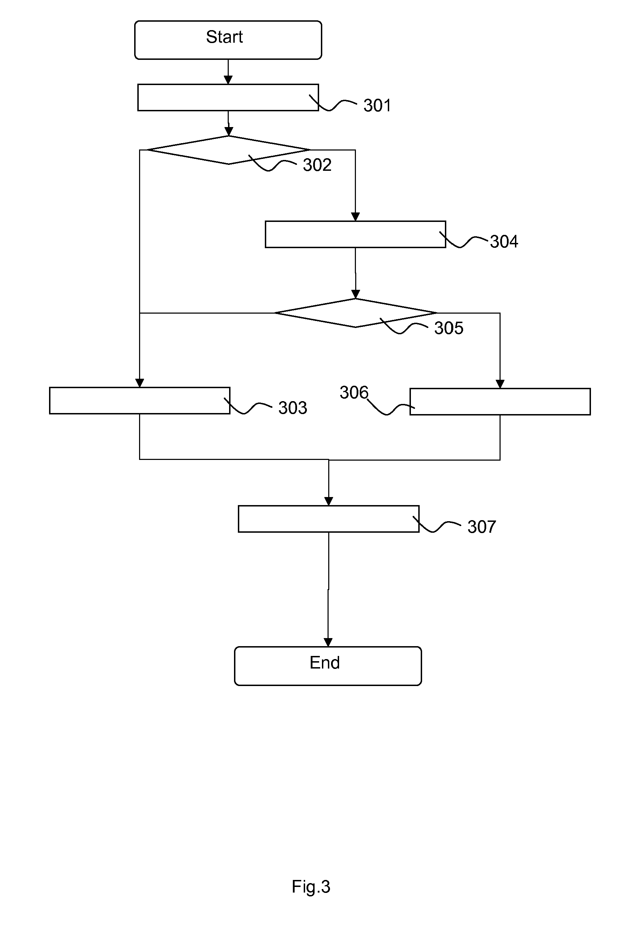

A method of video conferencing is explained below making reference to figure 3.

The method start for example whenever an incoming call is detected, e.g. when a session initiation protocol message SIP invite is detected. After the start a step 301 is executed.

In step 301 an identifier of the incoming call is determined.

For example from the uniform resource identifier (well known as URI) the identity of the participant requesting the call is extracted from the SIP invite. Afterwards a step 302 is executed.

In step 302 a test is performed to determine if the identifier is known. For example the uniform resource identifier (URI) of the participant received with the incoming call in the SIP invite is used in a data base look up in the Augmented Reality Profile Repository for the Augmented Reality Profile. To that end a SOAP request is sent from the controller 202 to the second processor 201 and a SQL request is sent from the second processor 201 to the data base 203. In turn the result of the look up is received from the data base 203 by the controller 202 through a respective response via the second processor 201. Depending on the result of the look up it is hence determined whether the identifier is known or not. The identifier is known in the example if the result indicates that an Augmented Reality Profile is known in the Augmented Reality Profile Repository. In case the identifier is not known a step 303 is executed. Otherwise a step 304 is executed. This means determining a communication context from information about one or more participants of the video conference.

In step 303 default parameter and/or background are loaded for the video conference participant having sent the SIP invite. This means that from storage the default parameter and/or background are read. The background may be a image including a company logo. Afterwards a step 307 is executed.

In step 304 caller specific setup, for example caller specific parameter or background, is loaded. This means that the Augmented Reality Profile of the participant having sent the SIP invite is accessed. This access is for example via the forth data link 240 using SOAP over HTTP or HTTPS and the fifth data link 250 to access repository using SQL. In a video conference with two participants, this request is for example a look up of the Augmented Reality Profile associated to the participant of the communication having sent the SIP invite and the participant the SIP invite is sent to. For multiple participants this step may be repeated for the other participants. In turn one or more Augmented Reality Profiles found in the look up are received by the controller 202 via the fourth and fifth data links 240, 250. Afterwards a step 305 is executed.

In step 305 a test or correlation of the participants is determined. Correlation in this context may comprise of matching the caller specific setup to the participants. In the example of two participants, it is for example determined if the caller sending the SIP invite is external to a company or not. In the first case, for example the Augmented Reality Profile indicates to use a background with the company logo instead of the actually captured background. Optionally a test is performed to determine if a suitable caller specific setup, e.g. a caller specific parameter or background is found. This increases the robustness for cases in which the one or more Augmented Reality Profiles found contain caller specific setup incompatible to each other. Upon successful correlation or test, a step 306 is executed. Otherwise step 303 is executed. This means correlating between the communication context and the predetermined setup associated to the one or more participants. For multiple participants the correlation or test may be performed individually and the resulting treatment of the video may be individual as well.

In step 306 the caller specific setup, e.g. caller specific parameter or background is loaded. For example via the third data link 230 the communication context used to define video treatment associated to the communication in progress is exchanged using the Realtime Transport Protocol (RTP) between the controller 202 and the first processor 204. This means accessing content of a predetermined setup for one or more of the participants associated to the respective participant of the conference. Afterwards step 307 is executed.

In step 307 the video conference session is initiated. For example the setup is controlled with specific parameters or background in the video data via the first data link 210 using the Realtime Transport Protocol. This means processing of video data depending on the result of the correlation. Afterwards the method ends.

Optionally in a step between step 302 and 303 in case no Augmented Reality Profile is found, a prompt is sent via the second data link 220 for input to create and manage an Augmented Reality Profile for the respective participant. In this case upon receipt of an input via the second data link 220, the Augmented Reality Profile is created using the appropriate Simple Object Access Protocol and Structured Query Language commands via the fourth and fifth data link 240, 250 respectively.

The description and drawings merely illustrate the principles of the invention. It will thus be appreciated that those skilled in the art will be able to devise various arrangements that, although not explicitly described or shown herein, embody the principles of the invention. All statements herein reciting principles, aspects, and embodiments of the invention, as well as specific examples thereof, are intended to encompass equivalents thereof.

The functions of the various elements shown in the figures, including any functional blocks labelled as 'processors' or 'controller', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that the flow chart represents various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method of video conferencing, **comprising**
- determining (302) a communication context from information about one or more participants of the video conference,
- accessing (306) content of a predetermined setup for one or more of the participants associated to the respective participant of the conference,
- correlating (305) between the communication context and the predetermined setup associated to the one or more participants, and
- processing (303, 304, 307) video data depending on the result of the correlation.

2. The method according to claim 1, wherein the predetermined setup is an Augmented Reality Profile comprising a mapping of communication context and information about one or more participant.

3. The method according to claim 2, comprising accessing an Augmented Reality Profile Repository.

4. The method according to claim 1 to 3, wherein the predetermined setup is loaded upon successful correlation and a predetermined default setup is loaded otherwise.

5. The method according to claim 1 to 4, wherein the video conference is started after the setup is loaded.

6. The method according to claim 1 to 5, wherein the setup is selected by looking up the Augmented Reality Profile depending on information about a caller's identification.

7. The method according to any of the aforementioned claims, wherein a caller specific background or a caller specific video parameter is selected as setup for the video conference.

8. A system for video conferencing, **comprising**
- a first processor (204) adapted to determine (302) a communication context from information about one or more participants of the video conference,
- a second processor (201) adapted to access (306) content of a predetermined setup for one or more of the participants associated to the respective participant of the conference, and
- a controller (202) adapted to correlate (305) between the communication context and the predetermined setup associated to the one or more participants, and to process (303, 304, 307) video data depending on the result of the correlation.

9. The system according to claim 8, wherein the predetermined setup is an Augmented Reality Profile comprising a mapping of communication context and information about one or more participant.

10. The system according to claim 9, comprising a data base (203) adapted as an Augmented Reality Profile Repository.

11. The system according to claim 8 to 10, wherein the predetermined setup is loaded upon successful correlation and a predetermined default setup is loaded otherwise.

12. The system according to claim 8 to 11, wherein the controller (202) is adapted to start the video conference after the setup is loaded.

13. The system according to claim 8 to 12, wherein the setup is selected by looking up the Augmented Reality Profile depending on information about a caller's identification.

14. The system according to any of the aforementioned claims, wherein a caller specific background or a caller specific video parameter is selected as setup for the video conference.

15. A computer program product comprising a computer usable medium having a computer readable program, **wherein** said computer readable program, when executed on a computer, causes the computer to perform the steps of the method according to claim 1.
